# EUROPÄISCHE PATENTSCHRIFT

(11) **EP 1 195 586 B1**
(45) Veröffentlichungstag und Bekanntmachung des Hinweises auf die Patenterteilung: **16.04.2003**
(21) Anmeldenummer: 01203641.4
(22) Anmeldetag: 24.09.2001
(51) Int. Cl.: G01G 23/01, G01G 21/28

(54) **Waage mit Träger für das Wägegut und Kalibriervorrichtung**
Weighing scale with support for goods and calibration device
Balance avec support pour produits et dispositif de calibration

(30) Priorität: 04.10.2000 CH 19572000
(43) Veröffentlichungstag der Anmeldung: 10.04.2002
(60) Teilanmeldung: 02102703.2
(73) Patentinhaber: Mettler-Toledo GmbH, 8606 Greifensee (CH)
(72) Erfinder: Lüchinger, Paul, 8610 Uster (CH)

(56) Entgegenhaltungen:
- US-A- 4 156 361
- US-A- 4 425 975
- US-A- 4 566 548
- US-A- 4 932 487
- US-A- 5 148 881

## Beschreibung

Die Erfindung betrifft eine Waage mit einem Wägeraum, einem Waagengehäuse, einem Träger für die Aufnahme von Wägegut an einem Ausleger der Wägezelle und einer Kalibriervorrichtung mit einer Auflage für Kalibriergewichte.

Waagen dieser Art dienen hauptsächlich als Analysenwaagen, die vielerorts in Labors Anwendung finden.

In der US 4,766,965 ist eine derartige Waage offenbart. Ein am unteren Ende des Lastaufnehmers der Wägezelle befestigter Ausleger trägt an seinem anderen Ende die Waagschale. Die Waagschale ist unmittelbar oberhalb des Bodens des Wägeraumes angeordnet, wobei ihre Verbindung mit dem sich unmittelbar unterhalb des Bodens des Wägeraums befindlichen Waagschalenträgers durch eine Durchführung am Boden des Wägeraums erfolgt. Unterhalb des Wägeraumbodens ist eine mit einem Mechanismus zum Auflegen und Abheben der Referenzgewichte versehene Kalibriervorrichtung angeordnet.

Die US 4 566,548 beschreibt eine Waage, die einen sich unterhalb des Wägeraumbodens befindlichen L-förmigen Ausleger zur Aufnahme der Waagschale aufweist, wobei dessen horizontaler Schenkel die Waagschale trägt. Die Waagschale ist durch eine Durchbrechung des Wägeraumbodens in den Wägeraum geführt. Der vertikale L-Schenkel des Auslegers ist über eine U-förmige Armlagerung am beweglichen Ende des Gelenkvierecks der Wägezelle befestigt. Zwei walzenförmige Justiergewichte lagern unterhalb des Wägeraumbodens unmittelbar unter der Waagschale und sind mit einer Hubmechanik arretiert. Für die Justierung werden wahlweise eines der Gewichte oder auch beide belastend mit dem Waagschalenträger gekoppelt.

Eine weitere Waage dieser Art ist in der JP-A-62-266421 beschrieben. Hierbei sind sowohl die Waagschale als auch ein den Waagschalenträger bildender Ausleger oberhalb des Wägeraumbodens angeordnet. Der Waagschalenträger ist direkt durch eine Durchführung in der Rückwand des Wägeraumes mit den inneren Einrichtungen des Waagengehäuses verbunden.

Allen diesen bekannten Waagen ist gemeinsam, dass sie relativ grosse Durchführungen durch den Boden oder die Rückwand des Wägeraums aufweisen, wodurch leicht Verunreinigungen ins Innere des Waagengehäuses gelangen können.

Die mit der Erfindung verbundene Aufgabe besteht somit darin, eine kalibrierfähige Waage vorzuschlagen, die kompakt gebaut ist, wenig verschmutzen kann und eine Vielzahl von Anwendungen zulässt.

Diese Aufgabe wird erfindungsgemäss durch die Merkmale des Anspruchs 1 gelöst. Eine Waage mit einem Wägeraum, einem eine Wägezelle enthaltenden, die Rückwand und den Boden des Wägeraums bildenden Waagengehäuse weist einen Träger zur Aufnahme von Wägegut an einem mit einer Auflage für Kalibriergewichte einer Kalibriervorrichtung versehenen Ausleger der Wägezelle auf, wobei der Ausleger eine durch Durchführungen in der Rückwand des Wägeraums reichende Koppelanordnung aufweist, mittels derer der Träger zur Aufnahme von Wägegut am Ausleger abnehmbar angebracht ist. Zwischen der Auflage für die Kalibriergewichte und dem Träger erstreckt sich geschlossen der Boden des Wägeraumes.

Die erfindungsgemässe Waage zeichnet sich durch eine kompakte Bauweise aus. Dadurch dass der Träger zur Aufnahme des Wägeguts mittels einer durch die Rückwand des Wägeraumes reichenden Koppelanordnung am Ausleger abnehmbar angebracht ist und oberhalb des geschlossenen Bodens des Wägeraumes, unter welchem sich die Kalibriervorrichtung befindet, geführt ist, stellen das System zur Lastaufnahme und die Kalibriervorrichtung demgemäss einen Doppelausleger dar. Die erforderlichen Durchführungen sind bei dieser erfindungsgemässen Anordnung klein gegenüber dem Stand der Technik, so dass der Verschmutzungsgrad drastisch reduziert wird. Eine Vielzahl von Anwendungen, die weiter unten beispielhaft beschrieben werden, ist möglich und eine optimale Handhabung aus ergonomischer Sicht ist gewährleistet.

Vorzugsweise liegt der Mittelpunkt des Trägers zur Aufnahme von Wägegut vertikal über dem Gewichtsschwerpunkt der Kalibriervorrichtung.

Gemäss einer bevorzugten Ausführungsform ist der Träger als ebenes Gitter ausgebildet. Dadurch bieten sich viele mögliche Anwendungen für das Wägen in einem Labor an. Beispielsweise können Behältnisse oder Aufsätze verschiedenster Art auf das Gitter aufgesetzt und/oder an dem Gitter festgeklemmt werden. Verschüttetes Wägegut bleibt nicht auf dem Träger liegen, sondern fällt zwischen den Gitterstäben vom Gitter herab und kann nicht versehentlich mitgewogen werden. Eine besonders günstige Ausgestaltung des Gitters, nämlich die der Ausformung der Gitterstäbe mit einen nach oben spitz zulaufenden Querschnitt, reduziert die Möglichkeit von Fehlmessungen aufgrund von verschüttetem Wägegut noch weiter. Ein gitterförmiger Träger ist überdies besonders gut geeignet für die Befestigung verschiedener Aufsätze zur Aufnahme von Wägegefässen.

Gemäss einer weiteren bevorzugten Ausführungsform ist der Träger als Halter für ein oder mehrere Laborgefässe ausgebildet, wobei der Halter auch schwenkbar sein kann.

Vorteilhafterweise ist unterhalb des Trägers auf dem Boden des Wägeraumes eine feste oder herausnehmbare Auffangschale für herab gefallenes Wägegut angeordnet, was das Reinigen des Wägeraums sehr erleichtert.

In einer vorteilhaften Weiterbildung der Erfindung ist an der zum Inneren des Wägeraumes gerichteten Rückwand ein festes Haltesystem für das Befestigen von Wägeraum-Zubehör angeordnet. Damit ist die Waage flexibel für verschiedenartige Anwendungen und/oder Experimente, die im Inneren des Wägeraums ausgeführt werden können.

In einer bevorzugten Ausgestaltung der Erfindung weist die Rückwand des Wägeraums einen säulenartigen Vorsprung auf, in dessen Seiten Nuten verlaufen, wobei die Koppelanordnung für die Ankopplung des Trägers am mit der Wägezelle verbundenen Ausleger seitlich des Haltesystems durchgeführt ist und/oder in der Flucht der Nuten angeordnet ist.

Gemäss einer bevorzugten Ausführungsform ist an der Rückwand ein Wägelift angeordnet, wobei der Lift eine gitterförmige oder mit Lamellen versehene Liftplattform aufweist, die von unten entsprechend in das Gitter des Trägers für die Waagschale in der Weise eingreift, dass das Wägegut vom Gitter abgehoben wird. Dieser Vorgang automatisiert den Tariervorgang. Es ist nicht mehr erforderlich das Wägegut vor jedem Tariervorgang manuell wegnehmen bzw. auflegen zu müssen. Dadurch wird eine potentielle Quelle für Fehlmessungen ausgeschieden. Es können somit Langzeitmessungen durchgeführt und auch zwischen den einzelnen Wägungen Kalibrierungen vorgenommen werden.

Um das Reinigen der Waage zu erleichtern ist die Liftplattform in einfacher Weise zerlegbar. Vorzugsweise ist der Lift motorisch antreibbar.

Weitere besondere Ausgestaltungen der erfindungsgemässen Waage, erlauben es, entweder Code-Identifikationssysteme oder Experimentiereinrichtungen, beispielsweise zur Trübungsmessung, in die Waage zu integrieren und damit Arbeitsvorgänge zu vereinfachen.

Die mit der Erfindung verbundenen Vorteile liegen nunmehr in der kompakten Bauweise und in der Vielseitigkeit für Anwendungen in Labors durch den modularen Aufbau. Die Erfindung zeichnet sich durch eine hohe Flexibilität und eine schnelle Umrüstbarkeit für einzelne Anwendungen aus. Darüber hinaus kann die Reinigung der einzelnen Komponenten in sehr einfacher Weise erfolgen.

Ausführungsbeispiele der Erfindung werden im folgenden in den stark schematisierten Zeichnungen dargestellt. Es zeigen:
- Fig. 1: eine Seitenansicht der Waage,
- Fig. 2A und 2B: eine dreidimensionale Darstellung des Wägeraums ohne Waagengehäuse und ohne Windschutz,
- Fig. 3A bis 3F: Aufsätze für verschiedene Anwendungen auf das als Träger zur Aufnahme des Wägeguts dienende Gitter,
- Fig. 4A bis 4C: eine andere Ausgestaltung des Trägers zur Aufnahme des Wägeguts in dreidimensionaler Darstellung,
- Fig. 5A und 5B: eine weitere Ausgestaltung des Trägers zur Aufnahme des Wägeguts in dreidimensionaler Darstellung,
- Fig. 6A und 6B: die Höhenverstellung des Haltesystems, A in Seitenansicht, B in Draufsicht,
- Fig. 7: ein Wägelift in dreidimensionaler Darstellung,
- Fig. 8: eine Plattform des Lifts in einer Gitterausführung mit Träger in der Seitenansicht,
- Fig. 9A und 9B: die Funktionsweise des Lifts in dreidimensionaler Darstellung,
- Fig. 10: eine Einrichtung zur Code-Erfassung am Wägegefäss in der Seitenansicht,
- Fig. 11: eine Einrichtung zur Trübungsmessung des Wägegutes in der Seitenansicht.

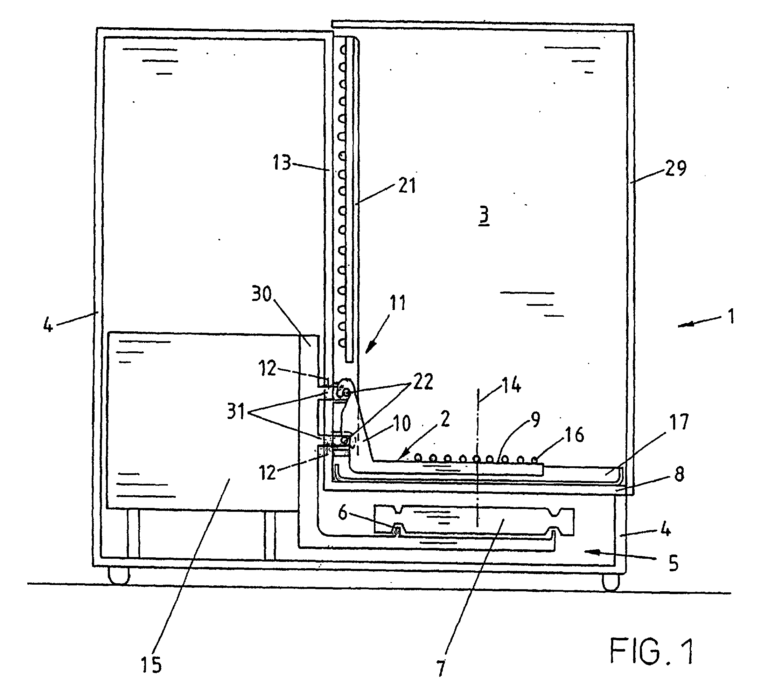

Die Figur 1 zeigt eine Seitenansicht der Waage 1 mit dem Waagengehäuse 4 und dem den Wägeraum 3 umgebenden Windschutz 29. Im linken Teil des Waagengehäuses 4 befindet sich die nicht näher dargestellte Wägezelle 15. Mit der Wägezelle 15 ist zur Krafteinleitung ein L-förmiger Ausleger 30 mit der Kalibriervorrichtung 5 verbunden, wobei im unteren Bereich des Auslegers 30 eine Auflage 6 für die Kalibriergewichte 7 vorgesehen ist. Die Kalibriervorrichtung 5 befindet sich in einem oben durch den Boden 8 des Wägeraumes 3 abgeschlossen Teil des Waagengehäuses 4. Am senkrechten Teil des L-förmigen Auslegers 30 sind in Richtung Wägeraum 3 Fortsätze 31 angebracht, die durch die Durchführungen 12 der Rückwand 13 des Wägeraumes 3 ragen. Diese Fortsätze 31 bilden mit den seitlich herausragenden Haltebolzen 22 die Koppelanordnung 11 für die Einhängungen 10 des Trägers 2. Der Träger 2 dient als Auflage für die verschiedensten Aufsätze zu unterschiedlichen Anwendungen, beispielsweise für Schalen, Laborgefässe, sonstige Behälter für Wägegüter oder für Wägegüter selbst. In diesem Beispiel ist der Träger 2 als ebenes Gitter 16 ausgebildet. Die Verwendung eines Gitters reduziert den möglicherweise Fehlmessungen verursachenden Windeinfluss, da die Oberfläche bei einem Gitter geringer ist als bei einem vollflächigen Träger.

Der Träger 2 besitzt einen Mittelpunkt für die Aufnahme des Wägeguts. Der Gewichtsschwerpunkt der Kalibriergewichte 7 befindet sich vorzugsweise auf der Achse 14 die sich bei aufgebrachtem Wägegut durch diesen Mittelpunkt (hier: durch den Flächenschwerpunkt der Trägerebene 9) erstreckt. Bedingt durch die Tatsache, dass der Boden 8 keine Durchführung für bewegliche Teile der Waage erforderlich macht, ist zwischen dem Boden 8 und dem Träger 2 eine Auffangschale 17 mit geschlossener Fläche vorgesehen. Verschüttetes Wägegut fällt somit in die Auffangschale 17 und kann nicht versehentlich mitgewogen werden. Dies ist insbesondere dann gegeben, wenn die Gitterstäbe des Gitters 16 in einer speziellen Ausführungsform einen dreieckigen nach oben spitz zulaufenden Querschnitt aufweisen. Im übrigen ist dieses System leicht zu reinigen.

An der Rückwand 13, oberhalb der seitlichen Aufhängung des Trägers 2 über die Einhängungen 10 an den sich nahe der Wand befindlichen Haltebolzen 22 der Fortsätze 31 ist im Inneren des Wägeraumes 3 ein Haltesystem 21 vorgesehen. Dieses Haltesystem 21 bietet eine Vielzahl von Erleichterungen und Anwendungen für den Wägebetrieb, wie weiter unten näher beschrieben wird.

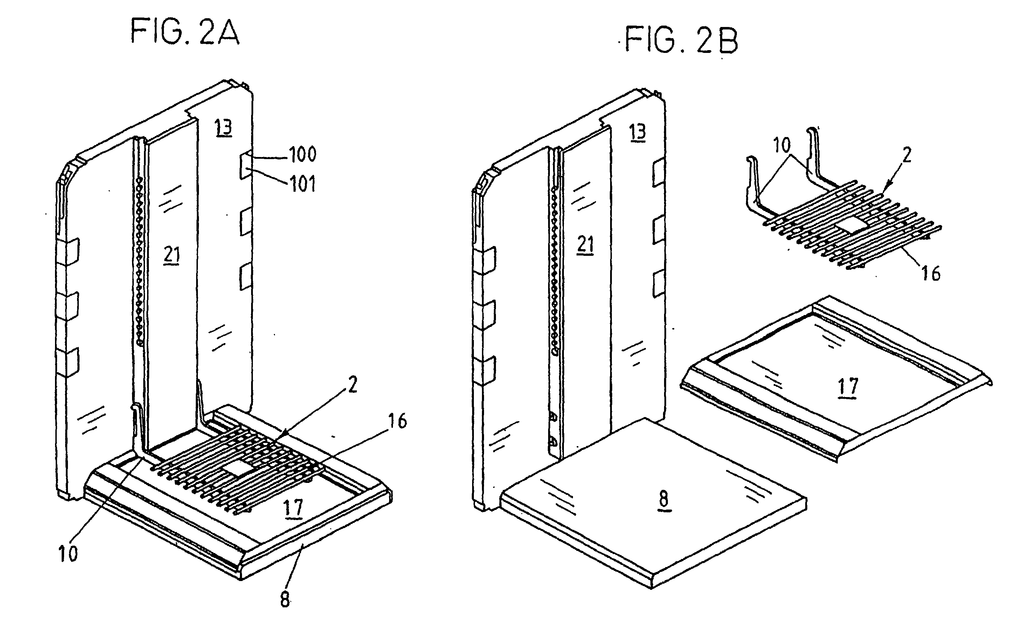

Die Figur 2A zeigt eine perspektivische Sicht in den Wägeraum 3 ohne Windschutz 29. Vom Waagengehäuse 4 sind nur gerade die die Rückwand 13 des Wägeraums 4 und die den Wägeraumboden 8 bildenden Teile gezeigt. In der Darstellung ist der Träger 2 eingehängt und die Auffangschale 17 ist eingesetzt. Die Figur 2B zeigt diese Anordnung mit ausgehängtem Träger 2 und herausgenommener Auffangschale 17.

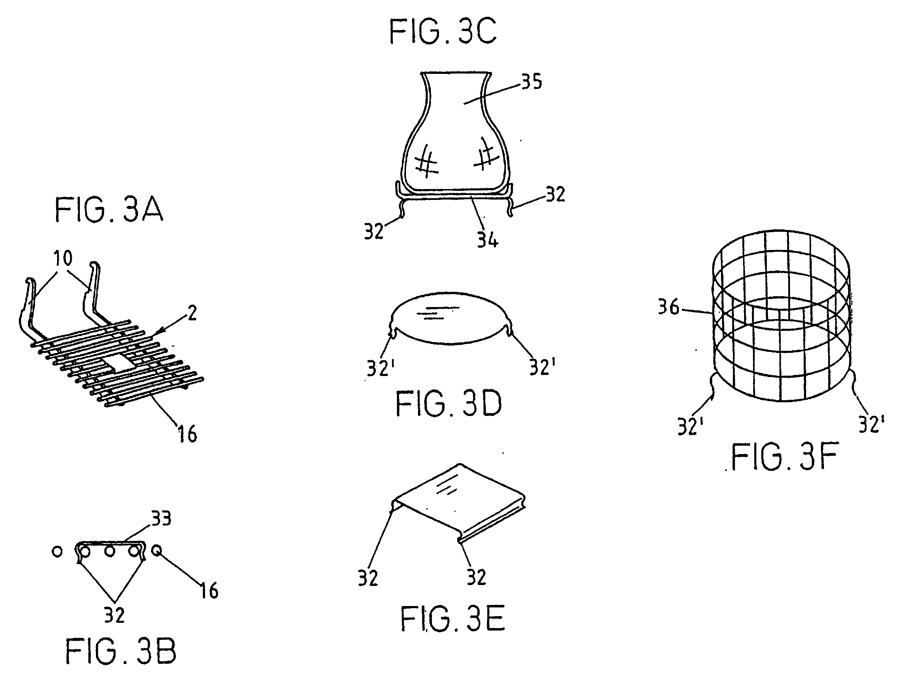

In den Figuren 3A bis 3F sind verschiedene Aufsätze für unterschiedliche Anwendungen im Zusammenhang mit dem als Gitter 16 ausgebildeten Träger 2 gezeigt. Figur 3A zeigt den Träger 2 als Gitter 16. Figur 3B zeigt eine Auflagefläche 33 mit aufklippbaren Rändern 32 als einer möglichen Befestigungsform. Denkbar sind auch schalenförmige Aufnahmeaufsätze 34 für Laborgefässe 35 (Figur 3C) oder kreisförmige Aufnahmeaufsätze, (Figur 3D) oder rechteckförmige Aufnahme-Flächen, nach Figur 3E. Die Lösung in Figur 3F stellt eine spezielle Anwendung als Gitterring 36 dar. Der Gitterring dient als Faraday-Käfig und wirkt elektrostatischen Aufladungen entgegen. Eine bevorzugte Befestigungsform ist jene mittels oben erwähnter aufklippbarer Ränder 32 oder aufklippbarer Stege 32'.

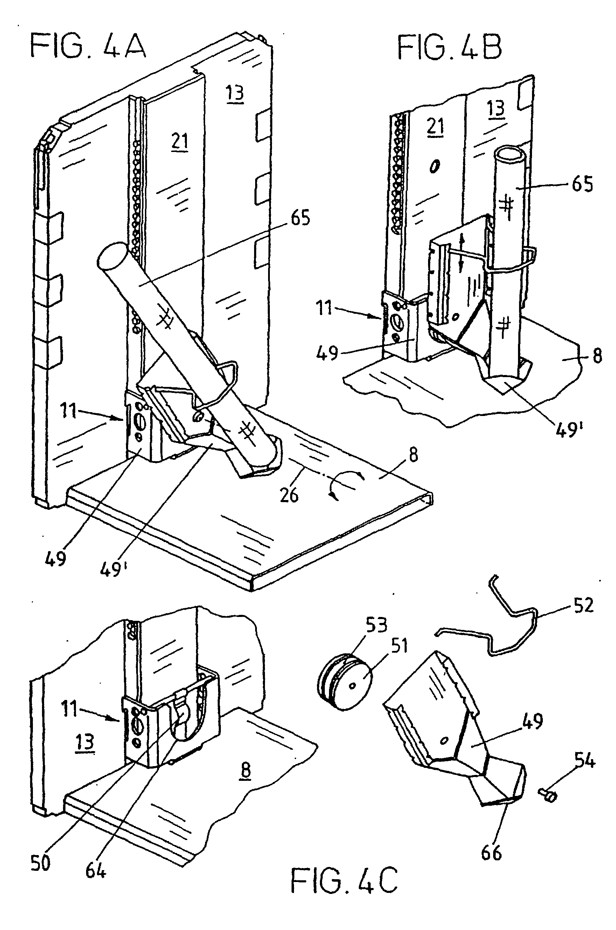

In den Figuren 4A bis 4C wird ein Träger dargestellt, der in Form eines Einhäng-Adapters 49 mit einem Halter 49' ausgestaltet ist. Figur 4A zeigt eine perspektivische Sicht in den Wägeraum 3 ohne Windschutz 29. Gezeigt ist der an der Koppelanordnung 11 befestigte Einhäng-Adapter 49 mit Halter 49' in einer um eine senkrecht zur Rückwand verlaufenden Achse 26 geneigten Stellung. Figur 4B zeigt als Ausschnitt von 4A den an der Koppelanordnung 11 befestigten Einhäng-Adapter 49 mit Halter 49' in senkrechter Stellung. In der Figur 4C ist der Halter 49' vom Einhäng-Adapter 49 gelöst und in auseinander genommenem Zustand dargestellt. Der Einhäng-Adapter 49 wird in ähnlicher Weise in die Koppelanordnung 11 eingehängt wie der Träger 2 in Figur 1. Der Einhäng-Adapter 49 weist eine nahezu halbkreisförmige Aussparung 64 auf, in der eine Feder 50 angeordnet ist. In die Aussparung 64 wird eine mit einer Rille 53 versehene Scheibe 51 eingeklemmt, so dass sie drehbar ist. Mit der Scheibe 53 ist der Halter 49' mittels der Schraube 54 verschraubt. Der somit drehbare Halter 49' ist mit einem schalenförmigen Fuss 66 versehen und dient beispielsweise zur Aufnahme von Reagenzgläsem 65, die mittels einer höhenverstellbaren Klammer 52 gehalten werden. Die Drehbarkeit des Halters 49' erleichtert die Zugabe von zu wägenden Substanzen in das Reagenzglas 65.

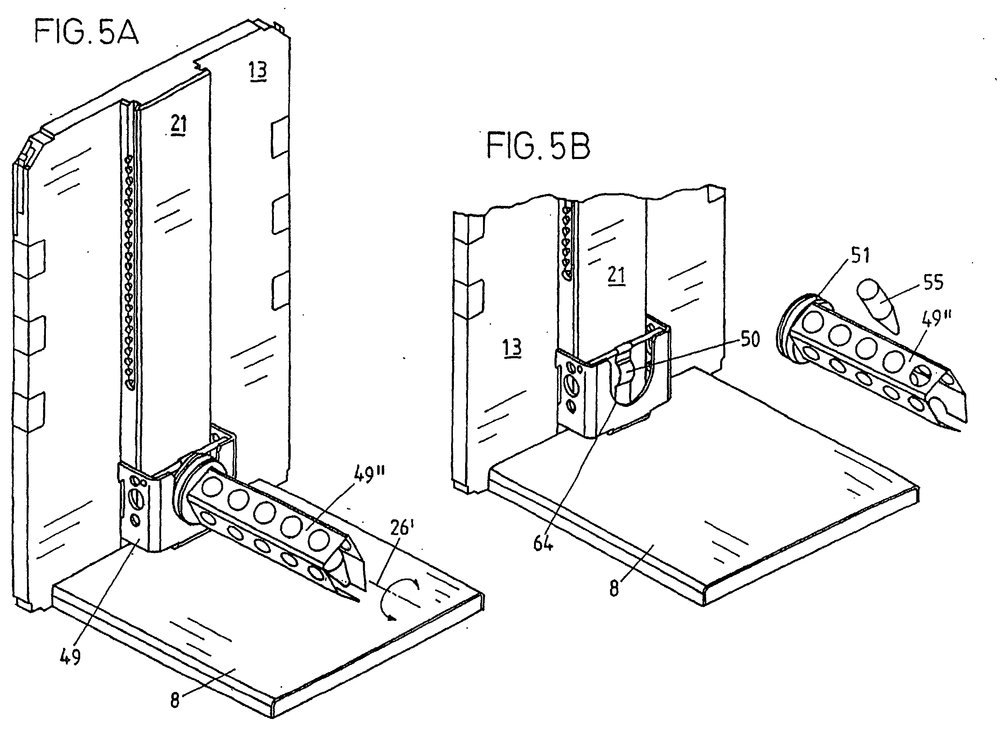

In Figur 5A ist in perspektivischer Darstellung ein an den Einhäng-Adapter 49 angebrachter Halter 49" gezeigt. Er dient der Aufnahme mehrerer kleiner enghalsiger Gefässe 55, beispielsweise Zentrifugengefässe. Der Halter 49" ist, ebenso wie der in Figur 4 dargestellte Halter 49', um eine Achse 26' drehbar gelagert und in gleicher Weise mit dem Einhäng-Adapter 49 verbindbar ausgestaltet. Die Figur 5B zeigt den vom Einhäng-Adapter 49 gelösten Halter 49". Da das Einfüllen von Pulvern in die enghalsigen Gefässe 55 mittels Spatel die Gefahr des Verschüttens und der Verunreinigung der Waage birgt, ist es von Vorteil, die enghalsigen Gefässe 55 zur Eingabe von Substanzen, beispielsweise auch Flüssigkeiten, die mittels einer Mehrkanalpipette eingefüllt werden können, in eine flache Stellung zu bringen.

Die erfindungsgemässe Waage 1 erlaubt, insbesondere durch ein an der Rückwand 13 angeordnetes Haltesystem 21 für das Befestigen von Wägeraum-Zubehör auf beispielsweise in verschiedenen Höhen über dem Boden 8 einhängbaren Zwischenböden oder Halterungen, eine Vielzahl von vorteilhaften Anwendungen im Innern des Wägeraums 3.

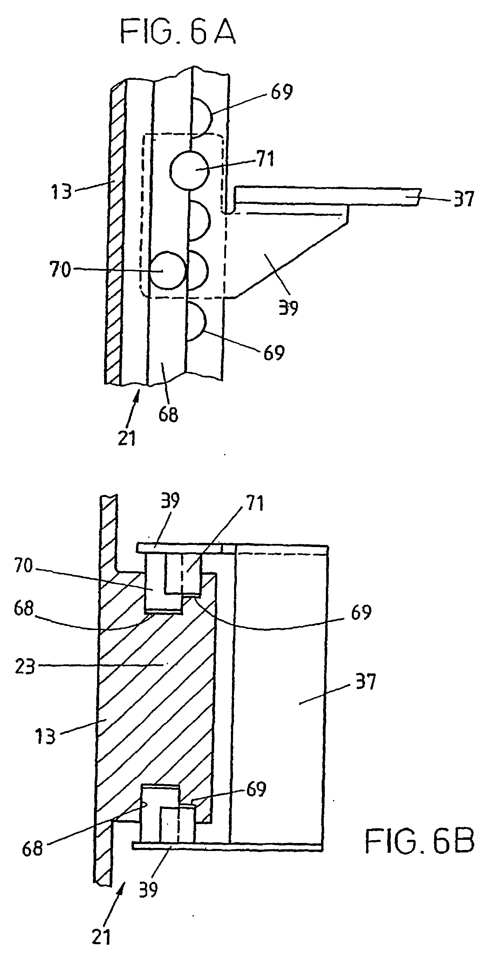

Einen von vielen möglichen Einhängemechanismen für Zwischenböden 37 und/oder Halterungen in das Haltesystem 21 zeigen die Figur 6A in Seitenansicht und Figur 6B im Schnitt. An der Rückwand 13 ist das Haltesystem 21 als säulenartiger Vorsprung 23 ausgebildet. Beidseitig des Haltesystems 21 ist jeweils eine vertikal verlaufende Nut 68 im Haltesystem 21 vorgesehen. Im unteren Bereich des säulenartigen Vorsprungs 23 in der Flucht der Nuten 68 ist die Koppelanordnung 11, an welcher der Träger 2 angebracht ist, angeordnet (siehe in den Figuren 1, 2, 4 und 5). Die Nuten 68 weisen in Richtung der Vorderseite des Haltesystems 21 regelmässig angeordnete, halbkreisförmige Aussparungen 69 auf, in welche Zapfen 71 der Einhängevorrichtung 39 des Zwischenbodens 37 oder einer Halterung formschlüssig eingreifen. Die gegenüber den Zapfen 71 nach hinten versetzten Zapfen 70 verbleiben im eingehängten Zustand in den Nuten 68. Durch leichtes Anheben des Zwischenbodens 37 oder einer Halterung an dem jeweils zum Bediener der Waage weisenden Ende gelangen die Zapfen 71 in die Nuten 68, wobei die Zapfen 70 die Verkippungsachse bilden. Die Zapfen 70 und 71 können nun in den Nuten 68 nach oben oder unten verschoben werden, bis durch Waagrechtstellung des Zwischenbodens 37 oder einer Halterung die Zapfen 71 wieder in jeweils eine der halbkreisförmigen Aussparungen 69 rechts und links am Haltesystem 21 eingreifen.

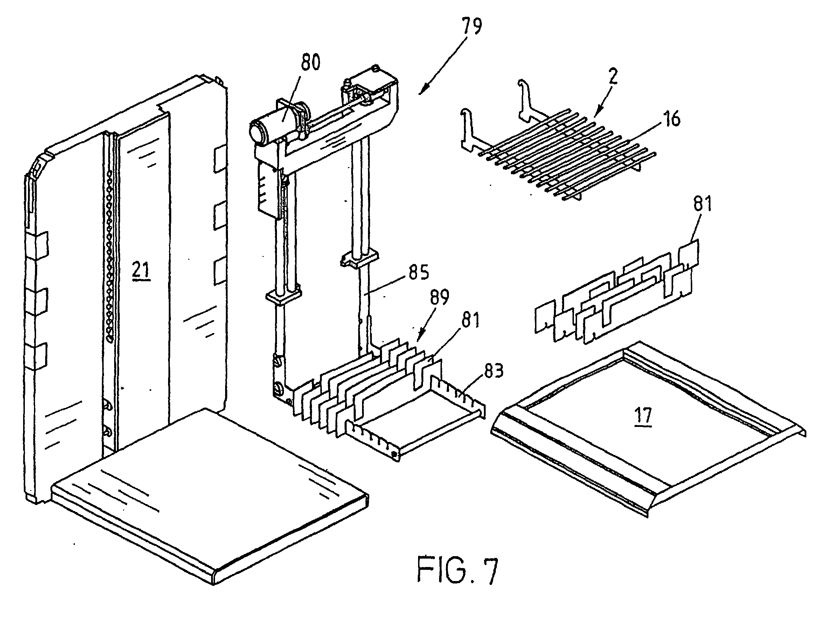

Die Figur 7 zeigt in perspektivischer Sicht einen in das Haltesystem 21 einhängbaren Wägelift 79. Der aus einem L-förmigen Gestell 85 aufgebaute Lift trägt im oberen Bereich einen Lift-Motor 80, der eine aus Armen 83 und Lamellen 81 aufgebaute Liftplattform 89 heben und senken kann. Die Lamellen 81 ragen von unten in die Zwischenräume eines als Gitter 16 ausgestalteten Trägers 2.

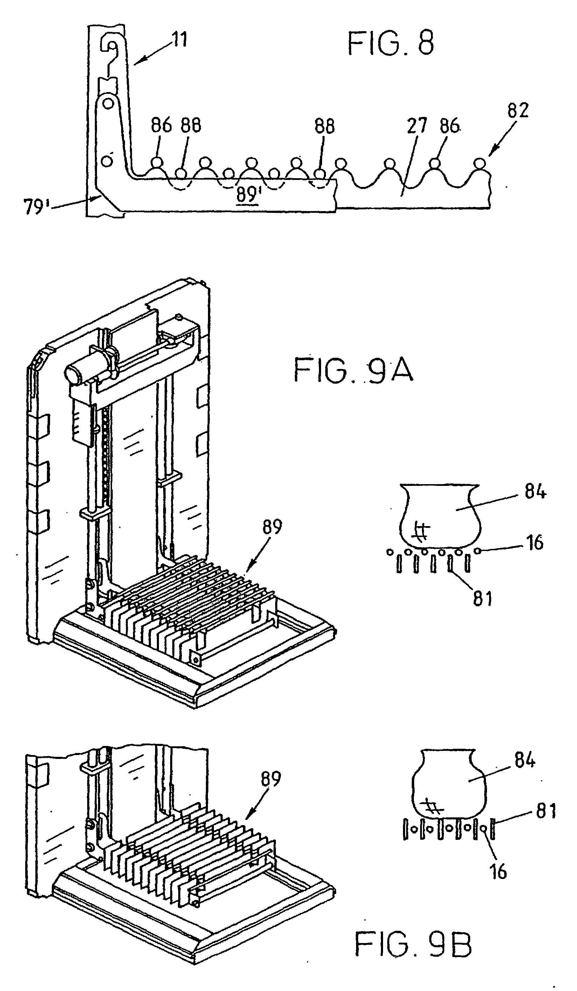

In der Figur 8 ist eine andere Ausführung des Wägelifts 79' als Ausschnitt im Bereich des Trägers 82 und der Liftplattform 89' in Seitenansicht dargestellt. Der mittels der Koppelanordnung 11 eingehängte Träger 82 zur Aufnahme des Wägegutes besitzt eine angepasste Gitterausführung in Form eines Rechens, bei dem die beiden seitlichen Begrenzungen 27 des Trägers 82 auf ihrer Oberseite ein sinusförmiges Längs-Profil besitzen, wobei auf den Kuppen die Gitterstäbe 86 befestigt sind. Zwischen den Gitterstäben 86 des Trägers 82, in den Tälern des sinusförmigen LängsProfils liegen die Gitterstäbe 88 des Lifts 79' im normalen Wägebetrieb unterhalb der Gitterstäbe 86 des Trägers 82 und gelangen durch Anheben des Lifts 79' in eine Lage oberhalb der Gitterstäbe 86 des Trägers 82.

Die Funktionsweise des Liftes 79 ist beispielhaft für die Lamellenausführung in den Figuren 9A und 9B dargestellt. Figur 9A zeigt den Lift 79 in der Wiegestellung, wobei sich das zu wiegende Gefäss 84 auf dem als Gitter 16 ausgebildeten Träger 2 befindet. Die Lamellen 81 sind abgesenkt. Figur 9B zeigt die Ruhestellung. Das Gefäss 84 steht auf den angehobenen Lamellen 81. Der mit der Waage verbundene, als Gitter 16 ausgebildete Träger 2 ist unbelastet. Die Trägerfläche des Liftes ist durch den lamellenartigen Aufbau leicht zu reinigen. Das gleiche gilt für den Träger 2 der eigentlichen Waage. Eine nutzbringende Anwendung dieser Einrichtung ergibt sich für Langzeitanwendungen der Waage, beispielweise für die Langzeitbeobachtung einer Wägung, bei welcher in vordefinierten Abständen ein Tarieren der Waage, in diesem Falle ohne Gefäss, notwendig wird. Auch die Durchführung einer Kalibrierung der Waage, beispielsweise während des Verlaufs einer Langzeitanwendung der Waage, ist denkbar. In diesem Falle wird das das Wägegut enthaltende Gefäss 84 mit dem Wägelift 79, 79' vom Träger 2, 82 abgehoben, das Kalibriergewicht 7 auf die Auflage 6 der Kalibrieranordnung 5 aufgebracht und gewogen, und nach Berechnen und Abspeichern der neuen Daten für die Kalibration der Waage 1 wird das das Wägegut enthaltende Gefäss 84 wieder durch Absenken des Wägelifts 79, 79' auf den Träger 2, 82 aufgesetzt und es kann weiter gearbeitet werden.

Als weitere Anwendung des Wägelifts soll auch auf das Mehrfach-Wiegen einer Probe zur Ermittlung statistischer Grössen, wie etwa der Standardabweichung, ohne dass der Bediener die Probe von Hand auflegen oder wieder abheben müsste, hingewiesen werden.

Das Gestell 85 des Lifts 79, 79' ist derart ausgestaltet, dass am Haltesystem 21 auch bei installiertem Lift 79, 79' weiterhin Wägeraum-Zubehör, beispielsweise ein Zwischenboden 37 oder eine Halterung, höhenverstellbar befestigt werden kann.

Denkbar ist es auch, den Lift 79, 79' für weitere Anwendungen flexibel auszugestalten. Indem beispielsweise die Lamellen 81 oder die Liftplattform 89, 89' abnehmbar ausgebildet sind, kann der Lift 79, 79' in Anwendungsfällen, bei denen keine Zwischentarierung oder Kalibrierung im laufenden Wägebetrieb notwendig ist, für die motorische Höhenverstellung des am Haltesystem 21 befestigbaren Wägeraum-Zubehörs, beispielsweise eines Zwischenbodens 37 oder einer Halterung, dienen. Diese sind dann nicht direkt in das Haltesystem 21 eingehängt, sondern in den Lift 79, 79', der seinerseits jedoch wiederum am Haltesystem 21 befestigt ist. Alternativ kann das Haltesystem 21 selbst als eine Art Lift ausgebildet sein.

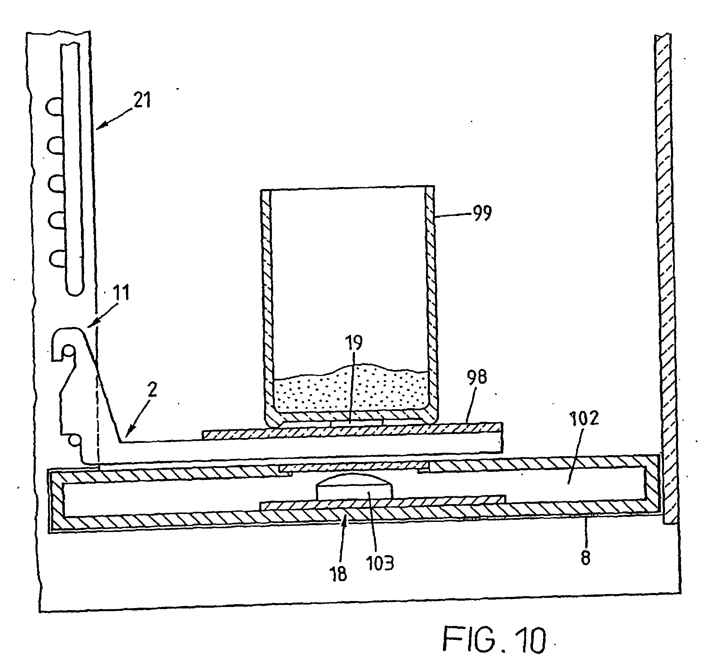

Durch die flexible Ausgestaltung des als Waagschale dienenden Trägers 2 und dadurch, dass dieser mittels der Koppelanordnung 11 mit der Wägezelle 15 durch Durchführungen 12 an der Rückwand 13 des Wägeraumes 3 verbunden ist und damit der Boden des Wägeraums 3 frei ist, kann unterhalb des Trägers 2 am Boden 8 der Waage eine optische oder induktive Einrichtung zur Codeerfassung 18 des Wägeguts, durch beispielsweise am Boden des Gefässes 99 angebrachte Codes 19, installiert werden. Wie in Figur 10 zu sehen ist, befindet sich die optische oder induktive Einrichtung zur Codeerfassung 18 in einem Einschub 102. Dabei sind der Sender und der Empfänger vorzugsweise im gleichen Sensorgehäuse 103 untergebracht. Die Auflage 98 des Trägers 2 ist im Bereich des Codes 19 entweder durchsichtig gestaltet, z.B. aus Glas, (im Falle der optischen Erkennung) oder aus nichtinduktivem Material, z.B. Keramik oder Kunststoff (im Falle der induktiven Erkennung) gefertigt.

Die Einrichtung zur Codeerfassung 18, sei es über optische oder induktive Sensoren, kann auch seitlich des Trägers 2 angebracht sein, wobei der entsprechende Code ebenfalls an der Seite des Gefässes 99 angebracht ist. Insbesondere kann die Einrichtung zur Codeerfassung 18 höhenverstellbar in das Haltesystem 21 einhängbar ausgestaltet sein.

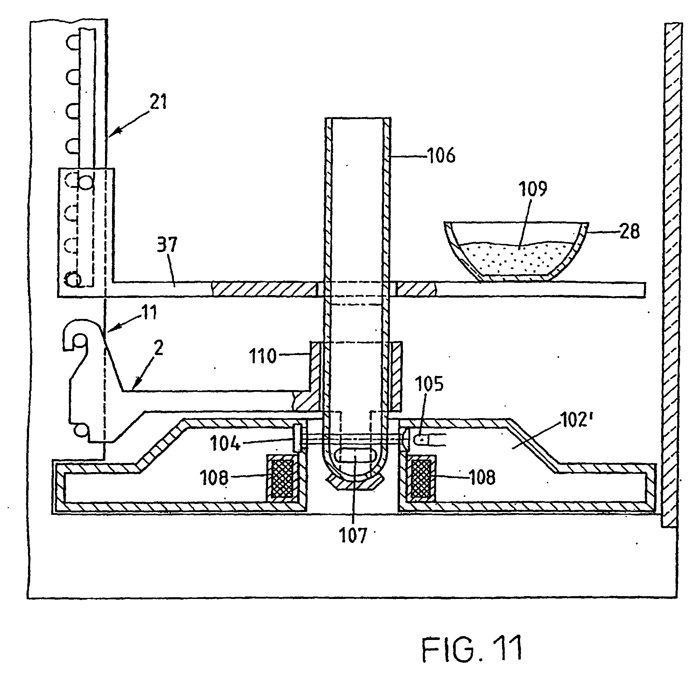

Auch Trübungsmessungen sind innerhalb des Wägeraums 3 durchführbar (siehe Figur 11) mittels eines ebenfalls am Boden 8 des Wägeraums 3 eingebrachten Einschubs 102'. Der Einschub 102' besitzt eine höckerartige Ausbuchtung nach oben, in welcher ein Laser 104 als Sender und eine Photodiode 105 als Empfänger untergebracht sind. Die Trübungsmessung erfolgt in Transmission eines durchsichtigen und an den Stellen des Lichtdurchtritts plan geschliffenen Messgefässes 106. Im unteren Bereich des Messgefässes 106 kann ein Rührer, beispielsweise ein Magnetrührer 107, vorhanden sein, der im Wechselfeld der Magnete 108 angetrieben wird. Das Messgefäss 106 wird von der Befestigung 110 gehalten, welche mit dem Träger 2 verbunden ist. Besonders vorteilhaft ist es, dass Gewichtsveränderung und Trübung in einem Arbeitsgang verfolgt werden können. Aus einem Glasgefäss 28, das sich auf dem in das Haltesystem 21 eingehängten Zwischenboden 37 befindet, wird in das Messgefäss 106, welches durch eine Öffnung des Zwischenbodens 37 ragt, eine Substanz 109 eingefüllt. Damit verändert sich die Trübung der im Messgefäss 106 befindlichen Flüssigkeit, aber auch deren Gewicht. Im Anschluss an eine Trübungsmessung kann bei stillstehendem Magnetrührer 107 beispielsweise das Gewicht der im Messgefäss 106 befindlichen Flüssigkeit bestimmt werden.

Für Messeinrichtungen und Experimentiervorrichtungen jeglicher Art, die im Wägeraum installiert werden, sind elektrische Zufuhrleitungen oder auch Schläuche zur Zuführung von Flüssigkeiten durch die in der Figur 2 dargestellten und dort mit Clips 101 verschlossenen Aussparungen 100 zuführbar, wie im Detail in der Parallel-Anmeldung CH-1958/00 beschrieben ist.

### Bezugszeichenliste

- 1: Waage
- 2: Träger
- 3: Wägeraum
- 4: Waagengehäuse
- 5: Kalibriervorrichtung
- 6: Auflage
- 7: Kalibriergewicht
- 8: Boden
- 9: Trägerebene
- 10: Einhängung
- 11: Koppelanordnung
- 12: Durchführungen
- 13: Rückwand
- 14: Achse
- 15: Wägezelle
- 16: Gitter
- 17: Auffangschale
- 18: Einrichtung zur Codeerfassung
- 19: Code
- 21: Haltesystem
- 22: Haltebolzen
- 23: säulenartiger Vorsprung
- 26: Achse senkrecht zur Rückwand
- 26': Achse
- 27: seitliche Begrenzungen
- 28: Glasgefäss
- 29: Windschutz
- 30: Ausleger
- 31: Fortsätze
- 32: aufklippbare Ränder
- 32': aufklippbare Stege
- 33: Auflagefläche
- 34: Aufnahmeaufsatz
- 35: Laborgefäss
- 36: Gitterring
- 37: Zwischenboden
- 38: Laborgefäss
- 49: Einhäng-Adapter
- 49': Halter
- 49": Halter
- 50: Feder
- 51: Scheibe
- 52: Klammer
- 53: Rille
- 54: Schraube
- 55: enghalsige Gefässe
- 64: Aussparung
- 65: Reagenzglas
- 66: Fuss
- 68: Nut
- 69: halbkreisförmige Aussparung
- 70: Zapfen
- 71: Zapfen
- 79: Lift
- 79': Lift
- 80: Lift-Motor
- 81: Lamellen
- 82: Träger
- 83: Arme
- 84: Gefäss
- 85: Gestell
- 86: Gitterstäbe des Trägers
- 88: Gitterstäbe des Lifts
- 89: Liftplattform
- 89': Liftplattform
- 98: Auflage
- 99: Gefäss
- 100: Durchführungen
- 101: Clips
- 102: Einschub
- 102': Einschub
- 103: Sensorgehäuse
- 104: Laser
- 105: Photodiode
- 106: Messgefäss
- 107: Magnetrührer
- 108: Magnete
- 109: Substanz
- 110: Befestigung

## Patentansprüche

1. Waage (1) mit einem Wägeraum (3), einem eine Wägezelle (15) enthaltenden, die Rückwand (13) und den Boden (8) des Wägeraums (3) bildenden Waagengehäuse (4) und einem Träger (2) zur Aufnahme von Wägegut an einem mit einer Auflage (6) für Kalibriergewichte (7) einer Kalibriervorrichtung (5) versehenen Ausleger (30) der Wägezelle (15), **dadurch gekennzeichnet, dass** der Ausleger (30) eine durch Durchführungen (12) in der Rückwand (13) des Wägeraums (3) reichende Koppelanordnung (11) aufweist, mittels welcher der Träger (2) abnehmbar angebracht ist, und sich der Boden (8) geschlossen zwischen der Auflage (6) für Kalibriergewichte (7) und dem Träger (2) erstreckt.

2. Waage (1) nach Anspruch 1, **dadurch gekennzeichnet, dass** der Träger (2) einen Mittelpunkt für die Aufnahme des Wägeguts aufweist und dieser bei aufgebrachtem Wägegut vertikal über dem Gewichtsschwerpunkt der Kalibriergewichte (7) liegt.

3. Waage (1) nach Anspruch 1 oder 2, **dadurch gekennzeichnet, dass** der Träger (2) als ebenes Gitter (16) ausgebildet ist.

4. Waage (1) nach Anspruch 3, **dadurch gekennzeichnet, dass** die Gitterstäbe des Gitters (16) einen nach oben spitz zulaufenden Querschnitt aufweisen.

5. Waage (1) nach Anspruch 3 oder 4, **dadurch gekennzeichnet, dass** verschiedene Aufsätze (33, 34) zur Aufnahme von Wägegefässen am Gitter (16) befestigbar sind.

6. Waage (1) nach Anspruch 1 oder 2, **dadurch gekennzeichnet, dass** der Träger (2) als Halter (49', 49") für ein oder mehrere Laborgefässe (55, 65) ausgebildet ist.

7. Waage (1) nach Anspruch 6, **dadurch gekennzeichnet, dass** der Halter (49', 49") schwenkbar ist.

8. Waage (1) nach einem der Ansprüche 1 bis 7, **dadurch gekennzeichnet, dass** zwischen Träger (2) und Boden (8) eine feste oder herausnehmbare Auffangschale (17) mit geschlossener Fläche angeordnet ist.

9. Waage (1) nach einem der Ansprüche 1 bis 8, **dadurch gekennzeichnet, dass** an der Rückwand (13) des Wägeraums (3) ein festes Haltesystem (21) für das Befestigen von Wägeraum-Zubehör auf verschiedenen Höhen über dem Boden (8) angeordnet ist.

10. Waage (1) nach Anspruch 9, **dadurch gekennzeichnet, dass** das Haltesystem (21) zwei parallel zur Rückwand (13) vertikal verlaufende Nuten (68) aufweist.

11. Waage (1) nach Anspruch 10, **dadurch gekennzeichnet, dass** entlang der Rückwand (13) ein säulenartiger Vorsprung (23) verläuft und die Nuten (68) seitlich in diesem Vorsprung (23) verlaufen.

12. Waage (1) nach Anspruch 10 oder 11, **dadurch gekennzeichnet, dass** die Durchführungen (12) im wesentlichen in der Flucht der Nuten (68) angeordnet sind.

13. Waage (1) nach einem der Ansprüche 1 bis 12, **dadurch gekennzeichnet, dass** im Wägeraum (3) am Waagengehäuse (4) ein Wägelift (79, 79') anbringbar ist.

14. Waage (1) nach Anspruch 13, **dadurch gekennzeichnet, dass** der Wägelift (79) eine gitterförmige, aus Lamellen (81) bestehende Liftplattform (89) aufweist und der Träger (2) als ebenes Gitter (16) ausgebildet ist, wobei die Lamellen (81) des Wägelifts (79) in das Gitter (16) des Trägers (2) in der Weise eingreifbar angeordnet sind, dass das Wägegut vom Träger mittels der Lamellen (81) abgehoben werden kann.

15. Waage (1) nach Anspruch 13, **dadurch gekennzeichnet, dass** sowohl der Träger (82) als auch die Liftplattform (89') als ebenes Gitter ausgebildet sind, wobei die Gitterstäbe der Liftplattform (89') zwischen den Gitterstäben des Trägers in der Weise eingreifbar angeordnet sind, dass das Wägegut vom Träger mittels der Liftplattform (89) abgehoben werden kann.

16. Waage (1) nach einem der Ansprüche 13 bis 15, **dadurch gekennzeichnet, dass** ein Motor (80) vorhanden ist zum motorischen Betrieb des Wägelifts (79, 79').

17. Waage (1) nach einem der Ansprüche 1 bis 16, **dadurch gekennzeichnet, dass** am Boden (8) des Wägeraums (3) ein Einschub (102) anbringbar ist, der eine Einrichtung zur Codeerfassung (18) enthält, wobei ein zu erfassender Code (19) am Boden eines Wägegutgefässes (99) angebracht ist.

18. Waage (1) nach einem der Ansprüche 9 bis 16, **dadurch gekennzeichnet, dass** am Haltesystem (21) eine Einrichtung zur Codeerfassung (18) höhenverstellbar anbringbar ist, wobei ein zu erfassender Code an der Seite des Gefässes (99) für das Wägegut angebracht ist.

19. Waage (1) nach Anspruch 17 oder 18, **dadurch gekennzeichnet, dass** die Codeerfassung optisch erfolgt.

20. Waage (1) nach Anspruch 17 oder 18, **dadurch gekennzeichnet, dass** die Codeerfassung induktiv erfolgt.

21. Waage (1) nach einem der Ansprüche 1 bis 20 , **dadurch gekennzeichnet, dass** am Boden (8) des Wägeraums (3) ein Einschub (102') anbringbar ist, der eine Einrichtung zur Messung der Trübung (104, 105) des Wägeguts enthält.

22. Waage (1) nach einem der Ansprüche 1 bis 21, **dadurch gekennzeichnet, dass** am Boden (8) des Wägeraums eine Einrichtung zum Rühren (107, 108) in einem Messgefäss (106) vorhanden ist.

23. Verfahren zum Kalibrieren einer Waage (1) während eines Wägevorgangs mit einer Vorrichtung nach den Ansprüchen 13 bis 16, **dadurch gekennzeichnet, dass** das das Wägegut enthaltende Gefäss (84) mit dem Wägelift (79, 79') vom Träger (2, 82) abgehoben wird, das Kalibriergewicht (7) auf die Auflage (6) der Kalibrieranordnung (5) aufgebracht und gewogen wird, und nach Berechnen und Abspeichern der neuen Daten für die Kalibration der Waage (1) das das Wägegut enthaltende Gefäss (84) wieder durch Absenken des Wägelifts (79, 79') auf den Träger (2, 82) aufgesetzt wird.

24. Verfahren nach Anspruch 23, **dadurch gekennzeichnet, dass** die Kalibrierung der Waage (1) während einer Langzeitanwendung der Waage (1) mindestens einmal durchgeführt wird.

## Claims

1. A balance (1) with a weighing compartment (3), further with a balance housing (4) containing a weighing cell (15) and forming the rear wall (13) and the floor (8) of the weighing compartment (3), and with a weighing-load carrier (2) arranged on a cantilever arm (30) of the weighing cell (15), said cantilever arm (30) having a weight-receiving element (6) for calibration weights (7) of a calibration device (5), **characterized in that** the cantilever arm (30) has a coupling arrangement (11) extending through passage openings (12) in the rear wall (13), the weighing-load carrier (2) being releasably mounted by means of the coupling arrangement (11), and that the floor (8) extends without openings between the weight-receiving element (6) for the calibration weights (7) and the weighing-load carrier (2).

2. A balance (1) according to claim 1, **characterized in that** the weighing-load carrier (2) has a center point on which to receive the weighing object and said center point is aligned vertically above the combined mass center of gravity of the calibration weights (7).

3. A balance (1) according to claim 1 or 2, **characterized in that** the weighing-load carrier (2) is configured as a level grate (16).

4. A balance (1) according to claim 3, **characterized in that** the grate bars of the grate (16) have a roof-like profile running into a ridge on top.

5. A balance (1) according to claim 3 or 4, **characterized in that** a variety of load-receiving devices (33, 34) for weighing containers are attachable to the grate (16).

6. A balance (1) according to claim 1 or 2, **characterized in that** the weighing-load carrier (2) is configured as a holder (49', 49") for one or more laboratory vessels (55, 65).

7. A balance (1) according to claim 6, **characterized in that** the holder (49', 49") is configured so that it can be tilted at different angles.

8. A balance (1) according to one of the claims 1 to 7, **characterized in that** a spill-collector plate (17) with an uninterrupted surface is arranged between the weighing-load carrier (2) and the floor (8).

9. A balance (1) according to one of the claims 1 to 8, **characterized in that** a built-in holder system (21) for attaching accessory devices at different vertical levels from the floor (8) is arranged at the rear wall (13) of the weighing compartment (3).

10. A balance (1) according to claim 9, **characterized in that** the holder system (21) comprises two vertical grooves (68) running parallel to the rear wall (13).

11. A balance (1) according to claim 10, **characterized in that** a projecting column-like portion (23) extends along the rear wall (13) and the grooves (68) extend in the laterally facing flanks of said column-like portion.

12. A balance (1) according to claim 10 or 11, **characterized in that** the passage openings (12) are arranged substantially in alignment with the grooves (68).

13. A balance (1) according to one of the claims 1 to 12, **characterized in that** a load-relief system (79, 79') can be attached to the balance housing (4) inside the weighing compartment (3).

14. A balance (1) according to claim 13, **characterized in that** the load-relief system (79) comprises a grid-shaped lift platform (89) with lamellar grid members (81) and the weighing-load carrier (2) is configured as a level grate (16), wherein the lamellar grid members (81) of the load-relief system (79) are arranged so that they reach through the grate (16) of the weighing-load carrier (2) in such a manner that the weighing object can be lifted from the grate (16) by means of the lamellar grid members (81).

15. A balance (1) according to claim 13, **characterized in that** the weighing-load carrier (82) as well as the lift platform (89') are configured as level grates, wherein the grate bars of the lift-platform (89') are arranged to pass between the grate bars (8,6) of the weighing-load carrier (82) in such a manner that the weighing object can be lifted off the weighing-load carrier by means of the lift platform (89).

16. A balance (1) according to one of the claims 13 to 15, **characterized in that** a motor (80) is provided to drive the load-relief system (79, 79').

17. A balance (1) according to one of the claims 1 to 16, **characterized in that** an insert module (102) can be installed on the floor (8) of the weighing compartment (3), said insert module (102) comprising a code-reader device (18) for reading a code (19) attached to the underside of a weighing container (99).

18. A balance (1) according to one of the claims 9 to 16, **characterized in that** a code-reader system (18) can be attached to the holder device (21) at an adjustable height, wherein a code (19) that is to be read is attached to the side of the weighing container (99).

19. A balance (1) according to claim 17 or 18, **characterized in that** the reading of the code occurs optically.

20. A balance (1) according to claim 17 or 18, **characterized in that** the reading of the code occurs inductively.

21. A balance (1) according to one of the claims 1 to 20, **characterized in that** an insert module (102') can be installed at the floor (8) of the weighing compartment (3), said insert module (102') containing an apparatus (104, 105) for measuring an amount of turbidity of the weighing sample.

22. A balance (1) according to one of the claims 1 to 21, **characterized in that** a stirring device (107, 108) for stirring in a measuring container (106) is provided at the floor (8) of the weighing compartment (3).

23. A process of calibrating a balance (1) during a weighing process by means of an apparatus according to the claims 13 to 16, **characterized in that** the weighing container (84) containing the weighing sample is lifted off the weighing load carrier (2, 82) by raising the load-relief system (79, 79'), the calibration weight (7) is set onto the weight-receiving element (6) of the calibration device (5) and is weighed, and after calculating and storing new data for the calibration of the balance (1), the weighing container (84) is set back on the weighing load carrier (2, 82) by lowering the load-relief system (79, 79').

24. The process of claim 23, **characterized in that** the calibration of the balance (1) is performed at least once during a long-term application of the balance (1).

## Revendications

1. Balance (1) avec un espace de pesage (3), un boîtier de balance (4) contenant une cellule de pesage (15), formant la paroi arrière (13) et le fond (8) de l'espace de pesage (3) et un support (2) pour le logement d'objets à peser sur un bras (30), pourvu d'un appui (6) pour des poids de calibrage (7) d'un dispositif de calibrage (5), de la cellule de pesage (15), **caractérisée en ce que** le bras (30) présente un dispositif d'accouplement (11) passant par des traversées (12) situées dans la paroi arrière (13) de l'espace de pesage (3), au moyen duquel le support (2) est disposé de façon amovible, et le fond (8) s'étend de façon fermée entre l'appui (6) pour les poids de calibrage (7) et le support (2).

2. Balance (1) selon la revendication 1, **caractérisée en ce que** le support (2) présente un point central pour le logement de l'objet à peser et celui-ci se situe verticalement au-dessus du centre de gravité des poids de calibrage (7), lorsque l'objet à peser est mise en place.

3. Balance (1) selon la revendication 1 ou 2, **caractérisée en ce que** le support (2) est conçu comme une grille (16) plane.

4. Balance (1) selon la revendication 3, **caractérisée en ce que** les barreaux de la grille (16) présentent une section de forme conique vers le haut.

5. Balance (1) selon la revendication 3 ou 4, **caractérisée en ce que** différents éléments rapportés (33, 34) peuvent être fixés sur la grille (16) pour le logement de récipients de pesée.

6. Balance (1) selon la revendication 1 ou 2, **caractérisée en ce que** le support (2) est conçu comme une fixation (49', 49'') pour un ou plusieurs récipients de laboratoire (55, 65).

7. Balance (1) selon la revendication 6, **caractérisée en ce que** la fixation (49', 49'') est pivotante.

8. Balance (1) selon l'une quelconque des revendications 1 à 7, **caractérisée en ce qu'**un bac collecteur (17) fixe ou amovible avec une surface fermée est disposé entre le support (2) et le fond (8).

9. Balance (1) selon l'une quelconque des revendications 1 à 8, **caractérisée en ce que** sur la paroi arrière (13) de l'espace de pesage (3) est disposé un système de retenue (21) fixe pour la fixation d'accessoires de l'espace de pesage à différents niveaux au-dessus du sol (8).

10. Balance (1) selon la revendication 9, **caractérisée en ce que** le système de retenue (21) présente deux rainures (68) agencées verticalement et parallèlement à la paroi arrière (13).

11. Balance (1) selon la revendication 10, **caractérisée en ce que** ce qu'une saillie (23) en forme de colonne est agencée le long de la paroi arrière (13), et que les rainures (68) sont agencées latéralement dans cette saillie (23).

12. Balance (1) selon la revendication 10 ou 11, **caractérisée en ce que** les traversées (12) sont disposées sensiblement dans l'alignement des rainures (68).

13. Balance (1) selon l'une quelconque des revendications 1 à 12, **caractérisée en ce qu'**un élévateur de pesage (79, 79') peut être disposé dans l'espace de pesage (3) sur le boîtier de balance (4).

14. Balance (1) selon la revendication 13, **caractérisée en ce que** l'élévateur de pesage (79) présente une plate-forme élévatrice (89) en forme de grille et composée de lamelles (81) et le support (2) est conçu comme une grille (16) plane, les lamelles (81) de l'élévateur de pesage (79) étant disposées en pouvant s'engager dans la grille (16) du support (2) de telle sorte que l'objet à peser peut être soulevée du support au moyen des lamelles (81).

15. Balance (1) selon la revendication 13, **caractérisée en ce qu'**aussi bien le support (82) que la plate-forme élévatrice (89') sont conçus comme une grille plane, les barreaux de grille de la plate-forme élévatrice (89') étant disposés et pouvant s'engager entre les barreaux de grille du support de telle sorte que l'objet à peser peut être soulevée au moyen de la plate-forme élévatrice (89).

16. Balance (1) selon l'une quelconque des revendications 13 à 15 **caractérisée en ce qu'**il y a un moteur (80) pour le fonctionnement motorisé de la plate-forme de pesage (79, 79').

17. Balance (1) selon l'une quelconque des revendications 1 à 16, **caractérisée en ce qu'**on peut disposer sur le fond (8) de l'espace de pesage (3) un rack (102) qui contient un appareil pour l'enregistrement du code (18), un code (19) à saisir étant disposé sur le fond d'un récipient pour l'objet à peser (99).

18. Balance (1) selon l'une quelconque des revendications 9 à 16, **caractérisée en ce qu'**un appareil pour l'enregistrement du code (18) peut être disposé sur le système de retenue (21) de façon réglable en hauteur, un code à enregistrer étant disposé sur le côté du récipient (99) pour l'objet à peser.

19. Balance (1) selon la revendication 17 ou 18, **caractérisée en ce que** l'enregistrement du code s'effectue de façon optique.

20. Balance (1) selon la revendication 17 ou 18, **caractérisée en ce que** l'enregistrement du code s'effectue de façon inductive.

21. Balance (1) selon l'une quelconque des revendications 1 à 20, **caractérisée en ce que**, sur le fond (8) de l'espace de pesage (3), on peut disposer un rack (102'), qui contient un appareil pour la mesure de l'opacité (104, 105) de l'objet à peser.

22. Balance (1) selon l'une quelconque des revendications 1 à 21, **caractérisée en ce qu'**un appareil pour le malaxage (107, 108) dans un récipient de mesure (106) est présent sur le fond (8) de l'espace de pesage.

23. Procédé pour le calibrage d'une balance (1) pendant une opération de pesage avec un dispositif conforme aux revendications 13 à 16, **caractérisé en ce que** le récipient (84) contenant l'objet à peser est soulevé avec l'élévateur de pesage (79, 79') du support (2, 82), le poids de calibrage (7) est appliqué sur l'appui (6) du dispositif de calibrage (5) et pesé, et après le calcul et la mémorisation des nouvelles données pour le calibrage de la balance (1), le récipient (84) contenant l'objet à peser est reposé sur le support (2, 82) par l'abaissement de l'élévateur de pesage (79, 79').

24. Procédé selon la revendication 23, **caractérisé en ce que** le calibrage de la balance (1) est effectué au moins une fois pendant une utilisation de longue durée de la balance (1).
